# EUROPEAN PATENT APPLICATION

(11) **EP 4 765 304 A1**
(43) Date of publication of application: **24.06.2026**
(21) Application number: 25864544.9
(22) Date of filing: 16.09.2025
(51) Int. Cl.: H01M 10/0587, H01M 50/463

(54) **WIRE-TYPE SECONDARY BATTERY**

(30) Priority: 02.10.2024 KR 20240134173
(71) Applicant: LG ENERGY SOLUTION, LTD., Seoul 07335 (KR)
(72) Inventor: LEEM, Han Jun, Daejeon 34122 (KR); KIM, Ji Hyun, Daejeon 34122 (KR); WON, Sang Yeon, Daejeon 34122 (KR); AHN, Byung Sun, Daejeon 34122 (KR)
(74) Representative: Hoffmann Eitle
(86) International application number: PCT/KR2025/014400
(87) International publication number: WO 2026/075394

(57) **Abstract**

According to exemplary embodiments, a wire-type secondary battery is provided. The wire-type secondary battery includes: a support including a core and a helical guide extending along a surface of the core; a first electrode helically wound along the surface of the core between the guides; a first separator layer provided on an outer side of the first electrode and helically wound along the first electrode; and a second electrode provided on an outer side of the first separator layer and helically wound along the first separator layer. The support includes: a first groove into which the first electrode is inserted; a second groove into which the first separator layer is inserted; and a third groove into which the second electrode is inserted. A width of the second groove is greater than a width of the first groove.

## Description

### [Technical Field]

The present disclosure relates to a wire-type secondary battery. This application claims the benefit of Korean Patent Application No. 10-2024-0134173, filed on October 2, 2024, the disclosure of which is incorporated herein by reference.

### [Background]

Unlike primary batteries, secondary batteries can be charged and discharged a plurality of times. Secondary batteries are widely used as energy sources for various wireless devices such as handsets, laptops, and cordless vacuum cleaners. Recently, due to improvements in energy density and economies of scale, the manufacturing cost per unit capacity of secondary batteries has dramatically decreased, and as the driving range of BEVs (Battery Electric Vehicles) has increased to levels comparable to fuel vehicles, secondary batteries are also being introduced in mobility applications.

Generally, secondary batteries are cylindrical, prismatic, or pouch-type. Cylindrical, prismatic, or pouch-type secondary batteries have fixed forms. To mount a secondary battery with a fixed form in a device, a certain space within the device is essentially required. Cylindrical, prismatic, or pouch-type secondary batteries are becoming a constraint on device miniaturization. Accordingly, various studies are being conducted to develop flexible batteries that can be deformed.

One solution for flexible batteries is the wire-type secondary battery. Wire-type secondary batteries can be deformed by bending, etc., thereby increasing space efficiency within devices and enabling device miniaturization.

### [Summary]

### [Technical Problem]

The technical problem to be solved by the technical idea of the present disclosure is to provide a wire-type secondary battery that is safe and easy to manufacture.

### [Technical Solution]

According to exemplary embodiments of the present disclosure for solving the above-mentioned problem, a wire-type secondary battery is provided. The wire-type secondary battery includes: a support including a core and a helical guide extending along a surface of the core; a first electrode helically wound along the surface of the core between the guides; a first separator layer provided on an outer side of the first electrode and helically wound along the first electrode; and a second electrode provided on an outer side of the first separator layer and helically wound along the first separator layer. The support includes: a first groove into which the first electrode is inserted; a second groove into which the first separator layer is inserted; and a third groove into which the second electrode is inserted. A width of the second groove is greater than a width of the first groove.

A width of the first separator layer is greater than a width of the first electrode.

A width of the third groove is greater than a width of the second groove.

A width of the first separator layer is greater than a width of the first electrode. A width of the second electrode is greater than a width of the first separator layer.

A thickness of the first electrode is equal to a depth of the first groove. A thickness of the first separator layer is equal to a depth of the second groove.

The first electrode, the first separator layer, and the second electrode each have a sheet form.

The first electrode includes a first current collector and a first electrode active material layer coated on one surface of the first current collector. The second electrode includes a second current collector and a second electrode active material layer coated on one surface of the second current collector.

The wire-type secondary battery further includes: a second separator layer provided on an outer side of the second electrode and helically wound along the second electrode; and a third electrode provided on an outer side of the second separator layer and helically wound along the second separator layer. The support further includes: a fourth groove into which the second separator layer is inserted; and a fifth groove into which the third electrode is inserted.

A width of the fourth groove is greater than a width of the third groove.

A width of the second separator layer is greater than a width of the second electrode.

A width of the fifth groove is greater than a width of the fourth groove.

A width of the second separator layer is greater than a width of the second electrode. A width of the third electrode is greater than a width of the second separator layer.

The first electrode includes a first current collector and a first electrode active material layer coated on one surface of the first current collector. The second electrode includes a second current collector and a second electrode active material layer coated on both surfaces of the second current collector. The third electrode includes a third current collector and a third electrode active material layer coated on one surface of the third current collector.

### [Advantageous Effects]

According to exemplary embodiments of the present disclosure, a wire-type secondary battery can be provided in which an electrode assembly is wound on a support including grooves having a stepped structure. Accordingly, the manufacture of the wire-type secondary battery is facilitated, and risks such as short circuits can be prevented.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a perspective view showing a wire-type secondary battery according to exemplary embodiments.
FIGS. 2 to 4 are cross-sectional views showing a wire-type secondary battery according to exemplary embodiments.
FIGS. 5 to 7 are cross-sectional views showing a wire-type secondary battery according to exemplary embodiments.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

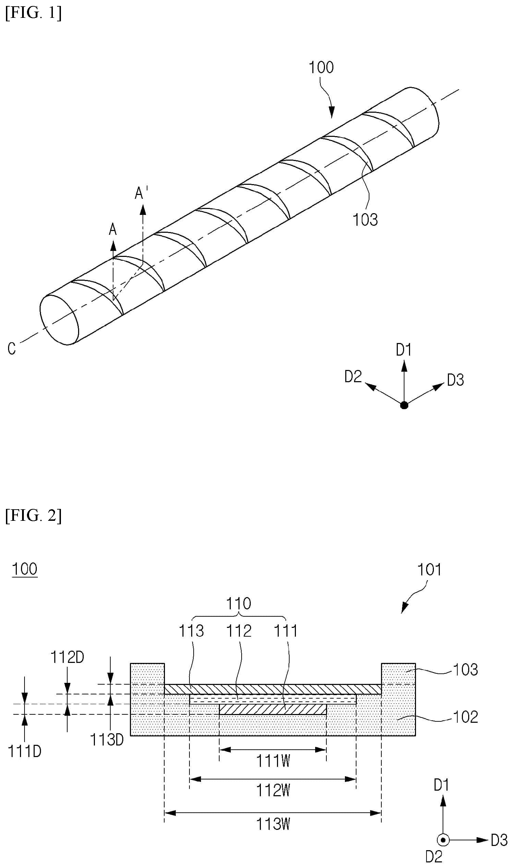

FIG. 1 is a perspective view showing a wire-type secondary battery 100 according to exemplary embodiments.

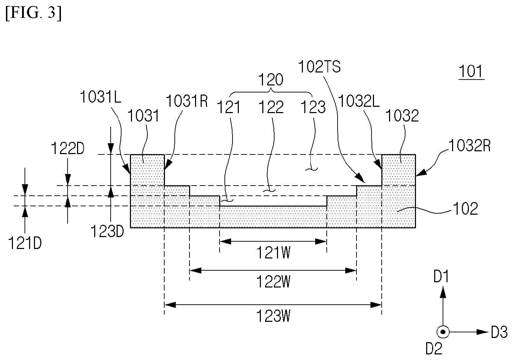

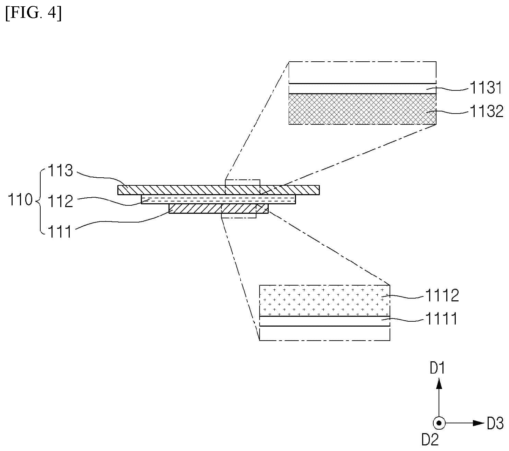

FIGS. 2 to 4 are cross-sectional views showing the wire-type secondary battery 100 according to exemplary embodiments. FIGS. 2 to 4 are cross-sectional views taken along line A-A' of FIG. 1. FIG. 2 shows an embodiment in which an electrode assembly 110 is wound on a support 101. FIG. 3 shows only the support 101. FIG. 4 shows only the electrode assembly 110.

Referring to FIGS. 1 to 4, the wire-type secondary battery 100 may include a support 101 and an electrode assembly 110.

The support 101 may include a core 102 and a guide 103. The core 102 may extend in a direction of a central axis C. The core 102 may have a circular cross-section perpendicular to its longitudinal direction. However, the shape of the core 102 is not limited thereto. The core 102 may have vertical cross-sections such as elliptical, polygonal, etc. According to exemplary embodiments, a space may be formed inside the core 102. A liquid electrolyte may be accommodated in the space formed inside the core 102.

The guide 103 may extend helically along the surface of the core 102. The guide 103 may be a separate component from the core 102, or may be integrated with the core 102. According to exemplary embodiments, the guide 103 may protrude from the core 102 with a height in a first direction D1 from the surface of the core 102. According to exemplary embodiments, the guide 103 may protrude from the surface of the core 102 in a radial direction of the core 102 and may extend in a helical direction along the surface of the core 102. Hereinafter, the first direction D1 may refer to a height direction of the guide 103, the second direction D2 may refer to an extension direction of the guide 103 (e.g., helical direction) or an extension direction of the electrode assembly 110 wound on the support 101 (e.g., helical direction), and the third direction D3 may refer to a width direction of the electrode assembly 110 wound on the support 101.

The guide 103 may have a first guide part 1031 and a second guide part 1032 adjacent to the first guide part 1031 in the D3 direction. The first guide part 1031 may include a first side surface 1031L and a second side surface 1031R facing the first side surface 1031L. The second guide part 1032 may include a first side surface 1032L and a second side surface 1032R facing the first side surface 1032L. The first side surface 1031L of the first guide part 1031 may be continuous with the first side surface 1032L of the second guide part 1032. The second side surface 1031R of the first guide part 1031 may be continuous with the second side surface 1032R of the second guide part 1032. The guide 103 may extend along the surface of the core 102 while maintaining a constant spacing between the second side surface 1031R of the first portion 1031 and the first side surface 1032L of the second portion 1032. When the electrode assembly 110 is not wound, the surface of the core 102 may be exposed between the second side surface 1031R of the first guide part 1031 and the first side surface 1032L of the second guide part 1032.

The support 101 may have grooves 120 having a stepped structure. The grooves 120 may include a first groove 121, a second groove 122, and a third groove 123. The second groove 122 may be located above the first groove 121 in the D1 direction. The third groove 123 may be located above the second groove 122 in the D1 direction. A space defined by the second groove 122 may be connected to a space defined by the first groove 121. A space defined by the third groove 123 may be connected to a space defined by the second groove 122.

The first groove 121 and the second groove 122 may be formed to be recessed from a uppermost surface 102TS of the core 102 between the second side surface 1031R of the first guide part 1031 and the first side surface 1032L of the second guide part 1032. The first groove 121 may have a width 121W along the D3 direction and a depth 121D along the D1 direction. The second groove 122 may have a width 122W along the D3 direction and a depth 122D along the D1 direction. The width 122W of the second groove 122 may be less than a spacing between the second side surface 1031R of the first guide part 1031 and the first side surface 1032L of the second guide part 1032. The width 121W of the first groove 121 may be less than the width 122W of the second groove 122.

The third groove 123 may be defined by the second side surface 1031R of the first guide part 1031, the first side surface 1032L of the second guide part 1032, the uppermost surface 102TS of the core 102, and an upper surface of the separator layer 112. The third groove 123 may have a width 123W along the D3 direction and a depth 123D along the D1 direction. The width 123W of the third groove 123 may be equal to the spacing between the second side surface 1031R of the first guide part 1031 and the first side surface 1032L of the second guide part 1032.

The first groove 121 may accommodate the first electrode 111. The second groove 122 may accommodate the separator layer 112. The third groove 123 may accommodate the second electrode 113. Each of the first groove 121, the second groove 122, and the third groove 123 may extend helically substantially parallel to the guide 103.

By including the support 101 having grooves 120 with a stepped structure, the manufacturing difficulty of the wire-type secondary battery 100 can be reduced. When stacking an electrode assembly on a core having a flat surface without a recessed structure, it was difficult to align the first electrode 111, separator layer 112, and second electrode 113 without error to separate the first electrode 111 and the second electrode 113. Even when the electrode assembly was aligned without error, when external stress was applied to the wire-type secondary battery 100 due to deformation such as bending, the alignment of each layer of the electrode assembly was disrupted and the electrodes came into contact, causing safety problems such as short circuits.

According to exemplary embodiments of the present disclosure, since the support 101 includes grooves 120 having a stepped structure, the manufacturing difficulty of the wire-type secondary battery 100 can be reduced. Furthermore, even when deformation such as bending is applied to the wire-type secondary battery 100, safety problems such as short circuits can be prevented because the electrodes do not come into contact.

The electrode assembly 110 may include a first electrode 111, a separator layer 112, and a second electrode 113. The first electrode 111 may be a positive electrode, and the second electrode 113 may be a negative electrode. Alternatively, the first electrode 111 may be a negative electrode, and the second electrode 113 may be a positive electrode. Hereinafter, the case where the first electrode 111 is a positive electrode and the second electrode 113 is a negative electrode will be described as a reference.

The first electrode 111 may include a first current collector 1111 and a first active material layer 1112. The first active material layer 1112 may be coated on one surface of the first current collector 1111. The first current collector 1111 may include aluminum, etc. The first active material layer 1112 may include LiCoO₂, LiNiO₂, LiNi₁₋ₓCoₓO₂ (0.2≤x≤0.5), LiNi_{1/3}Mn_{1/3}Co_{1/3}O₂, LiNi_{0.5}Mn_{0.5}O₂, LiMn₂O₄, LiMn₂₋ₓMₓO₄ (M is Al or Li, etc.), LiFePO₄, etc.

The separator layer 112 may separate contact between the first electrode 111 and the second electrode 113. The separator layer 112 may include polyethylene, polypropylene, polyolefin, PVdF (polyvinylidene fluoride), inorganic nanoparticles (SiO₂, TiO₂, Al₂O₃, ZrO₂, etc.), etc.

The second electrode 113 may include a second current collector 1131 and a second active material layer 1132. The second active material layer 1132 may be coated on one surface of the second current collector 1131. The second current collector 1131 may include copper, nickel, etc. The second active material layer 1132 may include lithium metal, graphite, coke, silicon, tin, etc.

The first electrode 111 may be wound along the surface of the core 102. The first electrode 111 may extend helically along the surface of the core 102. The first electrode 111 may have a width 111W along the D3 direction and a thickness 111D along the D1 direction. The first electrode 111 may have a sheet shape. The width 111W of the first electrode 111 may be substantially equal to the width 121W of the first groove 121. The thickness 111D of the first electrode 111 may be substantially equal to the depth 121D of the first groove 121.

The separator layer 112 may be provided on the outer side of the first electrode 111. The separator layer 112 may be wound helically along the first electrode 111. A lower surface of the separator layer 112 may completely cover an upper surface of the first electrode 111. The separator layer 112 may have a width 112W along the D3 direction and a thickness 112D along the D1 direction. The separator layer 112 may have a sheet shape. The width 112W of the separator layer 112 may be substantially equal to the width 122W of the second groove 122. The thickness 112D of the separator layer 112 may be substantially equal to the depth 122D of the second groove 122.

The second electrode 113 may be provided on the outer side of the separator layer 112. The second electrode 113 may be wound helically along the separator layer 112. A lower surface of the second electrode 113 may completely cover an upper surface of the separator layer 112. The second electrode 113 may have a width 113W along the D3 direction and a thickness 113D along the D1 direction. The second electrode 113 may have a sheet shape. The width 113W of the second electrode 113 may be substantially equal to the width 123W of the third groove 123. The thickness 113D of the second electrode 113 may be equal to or less than the depth 123D of the third groove 123.

### (Second embodiment)

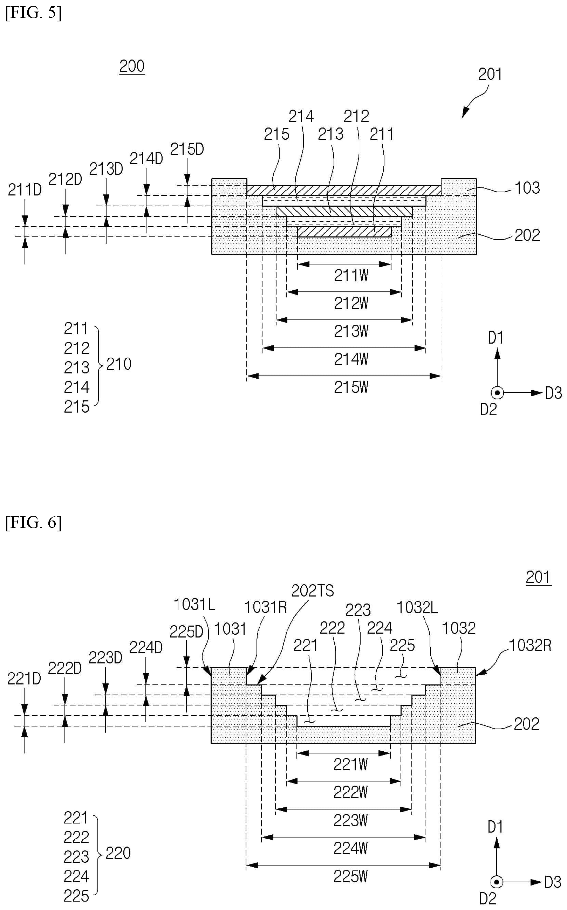

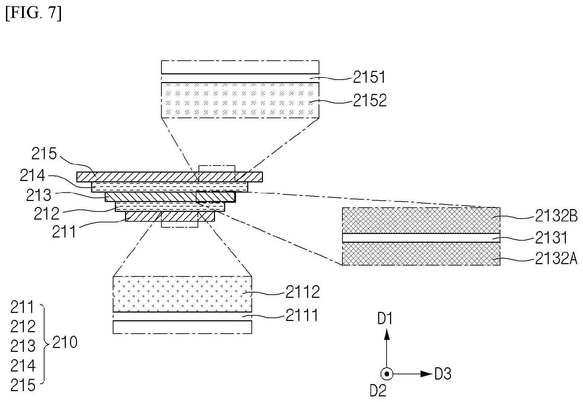

FIGS. 5 to 7 are cross-sectional views of a wire-type secondary battery 200 according to exemplary embodiments. FIG. 5 shows an embodiment in which an electrode assembly 210 is wound on a support 201. FIG. 6 shows only the support 201 of the wire-type secondary battery 200. FIG. 7 shows only the electrode assembly 210.

In FIGS. 5 to 7, components having the same reference numerals as FIGS. 1 to 4 may be applied with the descriptions described in the first embodiment, and identical descriptions will be omitted. Hereinafter, the components of the second embodiment that differ from the first embodiment will be mainly described.

Referring to FIGS. 5 to 7, the wire-type secondary battery 200 may include a support 201 and an electrode assembly 210.

The support 201 may have grooves 220 having a stepped structure. The grooves 220 may include a first groove 221, a second groove 222, a third groove 223, a fourth groove 224, and a fifth groove 225. The second groove 222 may be located above the first groove 221 in the D1 direction. A space defined by the second groove 222 may be connected to a space defined by the first groove 221. The third groove 222 may be located above the second groove 222 in the D1 direction. A space defined by the third groove 223 may be connected to a space defined by the second groove 222. The fourth groove 224 may be located above the third groove 222 in the D1 direction. A space defined by the fourth groove 224 may be connected to a space defined by the third groove 223. The fifth groove 225 may be located above the fourth groove 224 in the D1 direction. A space defined by the fifth groove 225 may be connected to a space defined by the fourth groove 224.

The first groove 221, the second groove 222, the third groove 223, and the fourth groove 224 may be formed to be recessed from the surface of the core 202 between the second side surface 1031R of the first guide part 1031 and the first side surface 1032L of the second guide part 1032. The first groove 221 may have a width 221W along the D3 direction and a depth 221D along the D1 direction. The second groove 222 may have a width 222W along the D3 direction and a depth 222D along the D1 direction. The third groove 223 may have a width 223W along the D3 direction and a depth 223D along the D1 direction. The fourth groove 224 may have a width 224W along the D3 direction and a depth 224D along the D1 direction.

The width 224W of the fourth groove 224 may be less than the spacing between the second side surface 1031R of the first guide part 1031 and the first side surface 1031L of the second guide part 1032. The width 223W of the third groove 223 may be less than the width 224W of the fourth groove 224. The width 222W of the second groove 222 may be less than the width 223W of the third groove 223. The width 221W of the first groove 221 may be less than the width 222W of the second groove 222.

The fifth groove 225 may be defined by the second side surface 1031R of the first guide part 1031, the first side surface 1032L of the second guide part 1032, the uppermost surface 202TS of the core 202, and an upper surface of the second separator layer 214. The fifth groove 225 may have a width 225W along the D3 direction and a depth 225D along the D1 direction. The width 225W of the fifth groove 225 may be equal to the spacing between the second side surface 1031R of the first guide part 1031 and the first side surface 1032L of the second guide part 1032.

The first groove 221 may accommodate the first electrode 211. The second groove 222 may accommodate the first separator layer 212. The third groove 223 may accommodate the second electrode 213. The fourth groove 224 may accommodate the second separator layer 214. The fifth groove 225 may accommodate the third electrode 215. Each of the first groove 221, the second groove 222, the third groove 223, the fourth groove 224, and the fifth groove 225 may extend helically substantially parallel to the guide 103.

The electrode assembly 210 may include a first electrode 211, a first separator layer 212, a second electrode 213, a second separator layer 214, and a third electrode 215. The first electrode 211 may be a positive electrode, the second electrode 213 may be a negative electrode, and the third electrode 215 may be a positive electrode. Alternatively, the first electrode 211 may be a negative electrode, the second electrode 213 may be a positive electrode, and the third electrode 215 may be a negative electrode. Hereinafter, the case where the first electrode 211 is a positive electrode, the second electrode 213 is a negative electrode, and the third electrode 215 is a positive electrode will be described as a reference.

The first electrode 211 may include a current collector 2111 and an active material layer 2112. The active material layer 2112 may be coated on one surface of the current collector 2111. The current collector 2111 may include aluminum, etc. The active material layer 2112 may include LiCoO₂, LiNiO₂, LiNi₁₋ₓCoₓO₂ (0.2≤x≤0.5), LiNi_{1/3}Mn_{1/3}CO_{1/3}O₂, LiNi_{0.5}Mn_{0.5}O₂, LiMn₂O₄, LiMn₂₋ₓMₓO₄ (M is Al or Li, etc.), LiFePO₄, etc.

The second electrode 213 may include a current collector 2131, a first active material layer 2132A, and a second active material layer 2132B. The first active material layer 2132A may be coated on a lower surface of the second current collector 2131. The second active material layer 2132B may be coated on an upper surface of the second current collector 2131. The second current collector 1131 may include copper, nickel, etc. Each of the first active material layer 2132A and the second active material layer 2132B may include lithium metal, graphite, coke, silicon, tin, etc.

The third electrode 215 may include a current collector 2151 and an active material layer 2152. The active material layer 2152 may be coated on one surface of the current collector 2151. The current collector 2151 may include aluminum, etc. The active material layer 2152 may include LiCoO₂, LiNiO₂, LiNi₁₋ₓCoₓO₂ (0.2≤x≤0.5), LiNi_{1/3}Mn_{1/3}CO_{1/3}O₂, LiNi_{0.5}Mn_{0.5}O₂, LiMn₂O₄, LiMn₂₋ₓMₓO₄ (M is Al or Li, etc.), LiFePO₄, etc.

Each of the first separator layer 212 and the second separator layer 214 may include polyethylene, polypropylene, polyolefin, PVdF (polyvinylidene fluoride), inorganic nanoparticles (SiO₂, TiO₂, Al₂O₃, ZrO₂, etc.), etc.

The first electrode 211 may be wound along the surface of the core 202. The first electrode 211 may extend helically along the surface of the core 202. The first electrode 211 may have a width 211W along the D3 direction and a thickness 211D along the D1 direction. The first electrode 211 may have a sheet shape. The width 211W of the first electrode 211 may be substantially equal to the width 221W of the first groove 221. The thickness 211D of the first electrode 211 may be substantially equal to the depth 221D of the first groove 221.

The first separator layer 212 may be provided on the outer side of the first electrode 211. The first separator layer 212 may be wound helically along the first electrode 211. A lower surface of the first separator layer 212 may completely cover an upper surface of the first electrode 211. The first separator layer 212 may have a width 212W along the D3 direction and a thickness 212D along the D1 direction. The first separator layer 212 may have a sheet shape. The width 212W of the first separator layer 212 may be substantially equal to the width 222W of the second groove 222. The thickness 212D of the first separator layer 212 may be substantially equal to the depth 222D of the second groove 222.

The second electrode 213 may be provided on the outer side of the first separator layer 212. The second electrode 213 may be wound helically along the first separator layer 212. A lower surface of the second electrode 213 may completely cover an upper surface of the first separator layer 212. The second electrode 213 may have a width 213W along the D3 direction and a thickness 213D along the D1 direction. The second electrode 213 may have a sheet shape. The width 213W of the second electrode 213 may be substantially equal to the width 223W of the third groove 223. The thickness 213D of the second electrode 213 may be substantially equal to the depth 223D of the third groove 223.

The second separator layer 214 may be provided on the outer side of the second electrode 213. The second separator layer 214 may be wound helically along the second electrode 213. A lower surface of the second separator layer 214 may completely cover an upper surface of the second electrode 213. The second separator layer 214 may have a width 214W along the D3 direction and a thickness 214D along the D1 direction. The second separator layer 214 may have a sheet shape. The width 214W of the second separator layer 214 may be substantially equal to the width 224W of the fourth groove 224. The thickness 214D of the second separator layer 214 may be equal to the depth 224D of the fourth groove 224.

The third electrode 215 may be provided on the outer side of the second separator layer 214. The third electrode 215 may be wound helically along the second separator layer 214. A lower surface of the third electrode 215 may completely cover an upper surface of the second separator layer 214. The third electrode 215 may have a width 215W along the D3 direction and a thickness 215D along the D1 direction. The third electrode 215 may have a sheet shape. The width 215W of the third electrode 215 may be substantially equal to the width 225W of the fifth groove 225. The thickness 215D of the third electrode 215 may be equal to or less than the depth 225D of the fifth groove 225.

In the first embodiment, the stepped grooves 120 include the first to third grooves 111, 112, 113, and in the second embodiment, the stepped grooves 220 include the first to fifth grooves 211, 212, 213, 214, 215. However, the shape of the stepped grooves is not limited thereto. According to exemplary embodiments, the stepped grooves may include seven or more grooves.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present application.

## Claims

1. A wire-type secondary battery comprising:
a support comprising a core and a helical guide extending along a surface of the core;
a first electrode helically wound along the surface of the core between the guides;
a first separator layer provided on an outer side of the first electrode and helically wound along the first electrode; and
a second electrode provided on an outer side of the first separator layer and helically wound along the first separator layer, wherein
the support comprises:
a first groove into which the first electrode is inserted;
a second groove into which the first separator layer is inserted; and
a third groove into which the second electrode is inserted, wherein
a width of the second groove is greater than a width of the first groove.

2. The wire-type secondary battery of claim 1, wherein
a width of the first separator layer is greater than a width of the first electrode.

3. The wire-type secondary battery of claim 1, wherein
a width of the third groove is greater than a width of the second groove.

4. The wire-type secondary battery of claim 3, wherein
a width of the first separator layer is greater than a width of the first electrode, and
a width of the second electrode is greater than a width of the first separator layer.

5. The wire-type secondary battery of claim 1, wherein
a thickness of the first electrode is equal to a depth of the first groove, and
a thickness of the first separator layer is equal to a depth of the second groove.

6. The wire-type secondary battery of claim 1, wherein
the first electrode, the first separator layer, and the second electrode each have a sheet form.

7. The wire-type secondary battery of claim 1, wherein
the first electrode comprises a first current collector and a first electrode active material layer coated on one surface of the first current collector, and
the second electrode comprises a second current collector and a second electrode active material layer coated on one surface of the second current collector.

8. The wire-type secondary battery of claim 1, further comprising:
a second separator layer provided on an outer side of the second electrode and helically wound along the second electrode; and
a third electrode provided on an outer side of the second separator layer and helically wound along the second separator layer, wherein
the support further comprises:
a fourth groove into which the second separator layer is inserted; and
a fifth groove into which the third electrode is inserted.

9. The wire-type secondary battery of claim 8, wherein
a width of the fourth groove is greater than a width of the third groove.

10. The wire-type secondary battery of claim 9, wherein
a width of the second separator layer is greater than a width of the second electrode.

11. The wire-type secondary battery of claim 9, wherein
a width of the fifth groove is greater than a width of the fourth groove.

12. The wire-type secondary battery of claim 11, wherein
a width of the second separator layer is greater than a width of the second electrode, and
a width of the third electrode is greater than a width of the second separator layer.

13. The wire-type secondary battery of claim 8, wherein
the first electrode comprises a first current collector and a first electrode active material layer coated on one surface of the first current collector,
the second electrode comprises a second current collector and a second electrode active material layer coated on both surfaces of the second current collector, and
the third electrode comprises a third current collector and a third electrode active material layer coated on one surface of the third current collector.
